Europäisches Patentamt

European Patent Office

Office européen des brevets

(19)

(11) Numéro de publication: **0 148 064**
**B1**

(12) **FASCICULE DE BREVET EUROPEEN**

(45) Date de publication du fascicule du brevet: **18.05.88**

(21) Numéro de dépôt: **84402556.9**

(22) Date de dépôt: **12.12.84**

(51) Int. Cl.⁴: **B 60 Q 1/44**

(54) **Dispositif de commande électronique des feux de stop des véhicules automobiles.**

(30) Priorité: **26.12.83 FR 8320762**

(43) Date de publication de la demande:
**10.07.85 Bulletin 85/28**

(45) Mention de la délivrance du brevet:
**18.05.88 Bulletin 88/20**

(84) Etats contractants désignés:
**AT BE CH DE FR GB IT LI NL SE**

(56) Documents cités:
**DE-A-2 251 917**
**DE-A-2 558 477**
**US-A-3 601 796**

(73) Titulaire: **Canova, Jean-Pierre Jacques**
**19, Avenue de Choisy-Verdi 4195**
**F-75643 Paris Cedex 13 (FR)**

(72) Inventeur: **Canova, Jean-Pierre Jacques**
**19, Avenue de Choisy-Verdi 4195**
**F-75643 Paris Cedex 13 (FR)**

Courier Press, Leamington Spa, England.

## Description

L'invention concerne un dispositif de commande des feux de stop des véhicules automobiles et des motocycles, venant suppléer le dispositif de commande classique lorsque le véhicule n'est plus entraîné, alors que la commande de freinage n'a pas encore été actionnée, l'alimentation des feux de stop étant anticipée par un module de commutation, mis en activation au-delà d'un seuil de vitesse, la commutation déclenchant l'alimentation des feux étant validée par la commande d'accélération ramenée au repos.

L'alimentation des feux de stop des véhicules automobiles ainsi que des motocycles, est actuellement assurée sur la quasi-totalité des véhicules grâce à un interrupteur à contact de repos, libéré par la commande de freinage, cet interrupteur étant dans la plupart des cas un simple fin de course dont le contact électrique alimente directement les feux arrières de signalisation lorsque la commande de freinage est actionnée. Ce dispositif de commande classique présente l'inconvénient de signaler la décélération avec retard, alors même que le véhicule est en cours de freinage (le pied a déjà enfoncé la pédale de freinage).

Différents systèmes ont déjà été proposés, permettant d'attirer l'attention des conducteurs suiveurs soit en utilisant des feux indicateurs supplémentaires, soit en faisant fonctionner les feux réglementaires suivant un mode différent (par exemple clignotement initial), mais ces systèmes étant déclenchés par la commande de freinage, ne permettent pas de signaler par anticipation le freinage d'un véhicule automobile. D'autres systèmes, déclenchés par la commande d'accélération ramenée au repos ont également été proposés, mais soit présentent un temps de réponse important ne permettant pas une signalisation anticipée en cas de ralentissement brusque, soit se basent sur l'emploi de 2 commutateurs en cascade, actionnés mécaniquement l'un par l'aiguille du compteur de vitesse, l'autre par la commande de propulsion (cf. brevet allemand No DE—A—2 558 477, publié le 07.07.1977). Ce dernier système à manoeuvres directes de commutation, semble nécessiter un contact glissant ainsi qu'un certain effort de manoeuvre du commutateur et n'assure pas de contrôle dynamique du seuil d'activation, nuisant ainsi à la fiabilité du système, de plus il ne tient pas compte du mouvement libre du véhicule, ce qui entraine dans certains cas un fonctionnement intempestif du système notamment en cas de changement de vitesse sur les véhicules à commande manuelle.

La présente invention vise à pallier à ces inconvénients. Selon l'invention, telle qu'elle est caractérisée dans les revendications, la commutation n'est autorisée que lorsque le moteur d'entrainement est accouplé, la durée de fonctionnement pouvant également être limitée, la commutation anticipée étant assurée par un module électronique avec contrôle dynamique du seuil d'activation.

Les avantages obtenus par ce dispositif de commande électronique des feux de stop se constatent dans l'élimination d'un fonctionnement intempestif conduisant à une accoutumance ou un agacement du conducteur suiveur, pouvant même occulter l'impact de la signalisation de freinage ainsi que dans l'amélioration de la fiabilité du système grâce notamment au contrôle dynamique du seuil d'activation, pour ne préserver que l'intéret essentiel de ce dispositif, à savoir l'anticipation de la signalisation de freinage. D'autres caractéristiques et avantages de l'invention ressortiront de la présentation qui va suivre, basée sur les dessins annexés, donnés uniquement à titre d'exemples nullement limitatifs afin d'illustrer la présente invention.

la figure 1 représente le bloc-diagramme du dispositif de commande électronique des feux de stop.

la figure 2 donne le schéma électrique d'une deuxième forme de réalisation détaillant le module électronique de commutation.

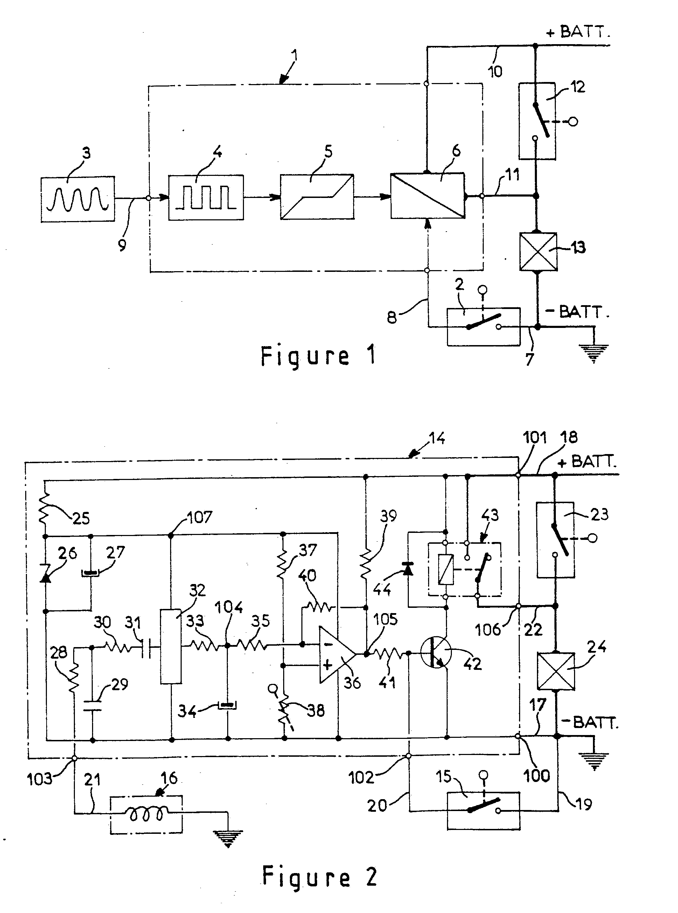

Le dispositif de commande électronique des feux indicateurs de décélération, représenté sur le bloc-diagramme de la figure 1, constitue un commutateur à commande électronique activé par un signal caractéristique de la dynamique du véhicule et venant alimenter les feux arrières de signalisation de freinage, en parallèle de l'interrupteur de commande classique d'origine. Ce dispositif comprend: un module électronique de commutation (1) attaqué par le signal électrique variable produit par un capteur de mouvement (3) connecté par un câble souple (9) au module de commutation (1) comportant en série un étage de mise en forme (4) du signal d'entrée, un relais à seuil ajustable (5) et un étage de commutation (6), ces différents circuits étant électriquement connectés, un interrupteur à action momentanée (2) dont le contact électrique s'ouvre dès que la commande de propulsion du véhicule est relachée, le moteur d'entrainement étant accouplé, connecté par 2 câbles souples (7) et (8) d'un côté à la borne négative de la batterie du véhicule, de l'autre, au circuit de commande de l'étage de commutation (6), un câble souple (10) d'alimentation du module de commutation depuis la borne positive de la batterie, la borne négative étant supposée à la masse, un câble souple (11) de connexion entre la borne de sortie du module de commutation et la borne de l'interrupteur d'origine (12) alimentant les feux arrières de signalisation de freinage (13), une de leurs bornes étant supposée à la masse.

Le capteur de mouvement (3) est dans cette première forme de réalisation, une simple bobine d'induction à grand nombre de spires, protégée dans un boitier plastique et fixée à proximité du boitier du tachymètre du type à aimant tournant équipant la plupart des véhicules automobiles. Lorsque le véhicule est en mouvement, le champ magnétique tournant produit par l'aimant, induit dans la bobine située à proximité, une tension alternative dont la fréquence est proportionnelle à la vitesse du véhicule. L'étage de mise en forme (4) qui pourra être réalisé avec des circuits électroniques classiques ou bien en technique intégrée, est constitué d'un convertisseur fréquence-tension après amplification éventuelle du signal d'entrée. La tension obtenue, proportionnelle à la vitesse de roulement du véhicule, est appliquée au relais à seuil ajustable (5) de façon à activer le dispositif au-dessus d'une certaine vitesse, par exemple 20 km/h. L'étage de commutation (6), devant procurer un fort gain en courant, est constitué d'un commutateur à semi-conducteurs fonctionnant en saturation et commandé par l'action simultanée du signal d'activation provenant du relais à seuil (5) et du signal de validation provenant d'une commande extérieure figurée par le contact de l'interrupteur (2). Une explication plus détaillée de l'exécution des différents étages du module de commutation sera donnée plus loin à propos de la deuxième forme de réalisation.

L'interrupteur à action momentanée (2) dans cette forme de réalisation est un simple Fin de Course actionné par la commande d'accélération et dont le contact est fermé lorsque la commande est actionnée, bloquant ainsi l'étage de commutation. Dès que la commande de propulsion est relachée, le contact de l'interrupteur (2) s'ouvre, autorisant ainsi le déblocage de l'étage de commutation (6) et permettant le fonctionnement par anticipation des feux de stop avant même que la commande de freinage ne soit actionnée et que le contact de l'interrupteur d'origine (12) ne se ferme. Lorsque la commande de freinage est relachée, le contact de l'interrupteur d'origine (12) s'ouvre, mais les feux de stop restent alimentés par le module électronique de commutation (1) jusqu'à ce que la commande d'accélération soit à nouveau actionnée et ne ferme le contact de l'interrupteur (2), bloquant ainsi l'étage de commutation et coupant l'alimentation des feux de stop. La commutation des feux indicateurs de décélération étant effectuée dans la plupart des cas par le module électronique de commutation, aussi bien à l'enclenchement qu'au déclenchement, il est possible d'alimenter des feux plus puissants, sans risque de déterioration des contacts de l'interrupteur d'origine, c'est notamment le cas pour les feux de camions. Sur les véhicules équipés d'une commande manuelle de changement de vitesse et d'embrayage, l'interrupteur (2) sera doublé par un second interrupteur fin de course monté en parallèle du premier, actionné par la commande d'embrayage et dont le contact électrique se ferme lorsque le groupe d'entrainement est désaccouplé, bloquant ainsi l'étage de commutation lors des manoeuvres de changement de vitesse.

La bobine d'induction servant de capteur de mouvement (3) pourra être remplacée par un capteur à effet Hall alimenté en tension continue, placé à proximité de l'aimant tournant du tachymètre et délivrant un signal électrique périodique de fréquence proportionnelle à la vitesse du véhicule. Le capteur de mouvement (3) pourra aussi être un codeur rotatif ou bien un générateur de tension rotatif, accouplé au système d'entrainement et délivrant un signal électrique variable en fonction de la vitesse de roulement du véhicule.

Dans une deuxième forme de réalisation dont le schéma électrique est donné à la figure 2, le capteur de mouvement (16) est réalisé en enroulant quelques spires du fil de connexion (21) autour du câble de liaison haute-tension entre la bobine et l'allumeur, une des extrémités du fil souple (21) étant connectée à la borne d'activation (103) du module de commutation (14), l'autre extrémité étant connectée au pôle négatif de la batterie (ou à la masse du véhicule lorsque la borne négative est choisie comme potentiel de masse). L'interrupteur à action momentanée (15) est connecté par 2 fils souples (19) et (20) respectivement au pôle négatif de la batterie et à la borne (102) de validation de la commutation. Les bornes d'alimentation (100) et (101) du module de commutation sont respectivement connectées par le fil souple (17) relié à la borne négative de la batterie et par le fil souple (18) relié à la borne positive. La borne de sortie (106) du module électronique de commutation est connectée par l'intermédiaire du fil souple (22) à la borne de l'interrupteur d'origine (23) alimentant les feux arrières de signalisation de freinage (24). La borne d'activation (103) du module de commutation est connectée en série à la résistance (28) et au condensateur (29) dont l'autre borne est au potentiel négatif. Le point milieu entre (28) et (29) attaque la bascule monostable réarmable (32) par l'intermédiaire de la résistance (30) et du condensateur (31) en série. La sortie du monostable (32) est connectée en série à une résistance (33) et un condensateur (34) dont l'autre borne est au potentiel négatif. Le point milieu (104) entre (33) et (34) est connecté à la résistance (35) qui attaque l'entrée négative du comparateur de tension (36), l'entrée positive étant attaquée par le point milieu d'un pont constitué de la résistance (37) connectée au point (107) et du potentiomètre (38) connecté au potentiel négatif. La borne de sortie (105) du comparateur (36) est connectée d'une part à la résistance (39) dont l'autre borne est au potentiel positif et d'autre part à la résistance (40) dont l'autre borne est connectée à l'entrée négative du comparateur (36). Le point (105) attaque la base du transistor (42) par l'intermédiaire de la résistance (41) en série. L'émetteur de ce transistor est connecté directement au potentiel négatif tandis que le collecteur du transistor est connecté à la bobine du relais (43) dont l'autre borne est au potentiel positif. La diode (44) est connectée aux bornes de la bobine du relais (43) dont le point milieu du contact inverseur est connecté à la borne de sortie (106) du module de commutation (14), le contact travail étant connecté au potentiel positif et le contact repos éventuel n'étant pas connecté. Le point (107) alimentant le monostable (32) et le comparateur (36) est le point milieu d'un pont constitué de la résistance (25) dont l'autre borne est connectée au potentiel positif du point (101) et d'une diode Zener (26) dont l'autre borne est connectée au potentiel négatif du point (100). Un condensateur (27) est également connecté entre le point (107) et le point (100), en parallèle de la diode Zener (26).

Le capteur de mouvement (16) délivre à la borne d'activation (103) du module de commutation un signal électrique périodique dont la fréquence est proportionnelle à la vitesse de rotation du moteur, signal induit dans les spires du fil (21) par les impulsions d'allumage. La cellule d'atténuation-filtrage composée des résistances (28) et (30) et du condensateur (29) permet d'adapter le signal de mouvement aux caractéristiques de la bascule monostable réarmable (32) dont l'entrée est attaquée par l'intermédiaire du condensateur de couplage (31). Ce monostable (32) permet de transformer le signal d'entrée en une série d'impulsions de même fréquence que celle du signal donné par le capteur de mouvement, mais de durée fixe, caractéristique de la bascule monostable. Pour cela, la période de référence de cette bascule monostable sera choisie inférieure à celle des signaux les plus fréquents produits par le capteur de mouvement dans la plage de réglage du seuil d'activation. En intégrant ces impulsions par un circuit de formation de la valeur moyenne constitué de la résistance (33) et du condensateur (34), on obtient au point (104), une tension proportionnelle au régime de rotation du moteur d'entrainement du véhicule jusqu'à une vitesse de rotation correspondant à la limite supérieure de préréglage du seuil d'activation. Au dela de cette limite, le monostable (32) délivre au point (104) un niveau de tension constant, supérieur au seuil d'activation, la fréquence du signal de mouvement transmis par le capteur (16) étant supérieure à la fréquence de référence du monostable (32). Dans la plage d'ajustement du seuil d'activation, ce premier étage constitue un convertisseur fréquence-tension classique dont la tension de sortie au point (104) est appliquée au relais à seuil constituant le deuxième étage du module de commutation. Moyennant une atténuation-filtrage adaptée, le signal électrique périodique de mouvement pourra êtra prélevé directement sur l'enroulement primaire de la bobine d'allumage, côté rupteur, celui-ci jouant le rôle du capteur de mouvement (16). Sur les véhicules équipés de groupes d'entrainement à moteur diesel ou à moteur électrique, le capteur de mouvement (16) pourra être un codeur rotatif accouplé au moteur d'entrainement de façon à produire des impulsions de fréquence proportionnelle au régime moteur.

Le potentiomètre (38) permet d'ajuster la tension de référence appliquée à l'entrée positive du comparateur (36) définissant ainsi le seuil d'activation du dispositif qui sera choisi vers un régime relativement bas, par exemple 2000 tours par minute. La tension de sortie du premier étage, fonction du régime moteur, est appliquée à l'entrée négative du comparateur (36) par l'intermédiaire de la résistance de protection (35). Lorsque le régime moteur dépasse le seuil préréglé, le comparateur (36) délivre au point (105) un niveau de tension permettant le basculement de l'étage de commutation. L'entrée négative du comparateur (36) pourra également être attaquée directement en tension pour un générateur rotatif servant de capteur de mouvement (16), accouplé au moteur d'entrainement et produisant une tension continue d'amplitude croissante avec le régime moteur, permettant ainsi de shunter le premier étage du module de commutation. Le relais à seuil constituant ce deuxième étage pourra également être réalisé à l'aide d'un opérateur logique, le seuil d'activation étant alors déterminé par l'ajustement d'une fréquence de référence à laquelle sera directement comparés la fréquence du signal périodique de mouvement entrainant ainsi une simplification du premier étage du module. Ce deuxième étage pourra également être réalisé à l'aide de techniques de comptage des impulsions conformées par le premier étage de façon à constituer un relais à valeur de seuil.

La base du transistor de commande (42) est maintenue au potentiel négatif, bloquant ainsi ce transistor tant que la commande de propulsion du véhicule est actionnée. A condition que le seuil d'activation soit dépassé (régime moteur supérieur à 2000 tours par minute par exemple), le transistor (42) est débloqué dès que la commande d'accélération est relachée (état figuré par l'interrupteur à action momentanée (15) dont le contact électrique est ouvert), alimentant ainsi la bobine du relais électromagnétique (43) dont le contact inverseur commute le potentiel positif sur la borne de sortie (106) du module de commutation. Le relais (43), déclenché par le transistor de commande (42), pourra aussi bien être remplacé par un relais à couplage photo-électrique, par un transistor de puissance ou bien par un montage de Darlington en éléments couplés intégrés procurant un fort gain en courant et donnant une moindre résistance de seuil en fonctionnement. La représentation de l'intérrupteur à action momentanée (15) permettant la validation du signal de commutation, n'est qu'une représentation du mode de fonctionnement de cet élément, mais ce pourrait également être un interrupteur statique, commandé par un détecteur de proximité, actionné par la commande d'accélération. La validation de la commutation pourrait d'ailleurs être réalisée de façon intermittente en intercalant un multivibrateur entre la borne de validation (102) du module et la base du transistor (42).

Le module électronique de commutation (1) pourra, dans une autre forme d'utilisation, servir à piloter d'autres fonctions liées à la décélération du véhicule en particulier la coupure brusque de l'arrivée de carburant.

D'un montage extrêmement simple et ne nécessitant aucune modification des organes classiques du véhicule, ce dispositif de commande électronique des feux de stop des véhicules automobiles pourra, grâce aux dimensions réduites de ses éléments, s'intégrer facilement à tous types de véhicules, aussi bien en première monte qu'en accessoire complémentaire. Le module électronique de commutation pourra aisément se loger sous le tableau de bord, à proximité des organes de commande d'accélération et de freinage de façon à en faciliter le raccordement électrique. L'alimentation électrique du module de commutation sera coupée en même temps que le contact afin d'éviter toute consommation de courant lors du stationnement du véhicule.

## Revendications

1. Dispositif de commande des feux de stop (13) des véhicules automobiles et des motocycles, venant suppléer le dispositif de commande classique lorsque le véhicule n'est plus entrainé, alors que la commande de freinage (12) n'a pas encore été actionnée, l'alimentation des feux de stop (13) étant anticipée par un module de commutation (1), mis en activation au-delà d'un seuil de vitesse, la commutation déclenchant l'alimentation des feux étant validée par la commande d'accélération ramenée au repos, dispositif caractérisé en ce que l'alimentation des feux de stop (13) est anticipée par un module électronique de commutation (1), recevant un signal électrique variable soit en amplitude soit en fréquence, représentatif du mouvement du véhicule, produit par un capteur de mouvement (3) et mis en forme par le premier étage (4) du module afin d'obtenir un signal électrique calibré attaquant un relais à seuil (5) qui, lorsque la grandeur variable du signal de mouvement passe le seuil prérégle, délivre un niveau de tension permettant l'activation d'un étage de commutation de puissance (6), la validation de la commutation étant effectuée par un ou plusieurs contacts électriques (2) de fin de course, autorisant le déblocage de l'étage de commutation (6) lorsque le moteur d'entrainement est accouplé et dès que la commande d'accélération est complètement relachée, l'étage de commutation (6) étant à nouveau bloqué dès que la commande d'accélération est actionnée ou dès que le moteur d'entrainement est désaccouplé ou à la fin d'une durée prédéterminée de fonctionnement.

2. Dispositif de commande électronique suivant la revendication 1, caractérisé en ce que le capteur de mouvement (3) délivre un signal électrique variable en fonction de la vitesse de roulement du véhicule au moyen d'un générateur de tension rotatif ou d'un codeur rotatif, celui-ci pouvant par exemple utiliser le champ magnétique tournant produit par l'aimant du tachymètre équipant le véhicule, grâce à un élément du type à effet Hall ou à une bobine d'induction, afin de délivrer un signal électrique périodique de fréquence proportionnelle à la vitesse de roulement du véhicule.

3. Dispositif de commande électronique suivant la revendication 1, caractérisé en ce que le capteur de mouvement (3) délivre un signal électrique variable en fonction de la vitesse de rotation du moteur d'entrainement du véhicule au moyen d'un générateur de tension rotatif ou d'un codeur rotatif, ce signal de mouvement pouvant par exemple être prélevé directement sur le système d'allumage du véhicule jouant le rôle de codeur rotatif, afin de délivrer un signal électrique périodique de fréquence proportionnelle à la vitesse de rotation du moteur d'entrainement.

4. Dispositif de commande électronique suivant la revendication 1, caractérisé en ce que l'étage de mise en forme (4) du signal électrique variable de mouvement, peut être constitué par un convertisseur fréquence-tension ou par un simple circuit de conformage d'impulsions.

5. Dispositif de commande électronique suivant la revendication 1, caractérisé en ce que le relais à seuil (5) peut être constitué par un comparateur bistable ajustable en tension ou par un opérateur logique ajustable en fréquence.

6. Dispositif de commande électronique suivant la revendication 1, caractérisé en ce que l'étage de commutation (6) peut être constitué par un relais électro-magnétique piloté par un transistor de commande, par un relais à couplage photo-électrique, par un transistor de puissance ou par un montage de Darlington en éléments couplés intégrés.

7. Dispositif de commande électronique suivant la revendication 1, caractérisé en ce que le module de commutation (1), peut servir à piloter d'autres fonctions liées à la décélération du véhicule, en particulier la coupure brusque de l'arrivée de carburant.

## Patentansprüche

1. Vorrichtung zur Schaltung der Bremsleuchten (13) eines Kraftfahrzeuges oder eines Motorrads, die die klassische Steuereinrichtung fortsetzt wenn das Kraftfahrzeug nicht mehr in Antrieb ist und vor die Betätigung des Bremspedals (12), durch einen, über einer bestimte Geschwindigkeit aktivierten Schaltblock (1) der als das Gaspedal in seiner Leeraufstellung zurückgezogen wird, die Bremsleuchten (13) früher einschaltet, Schaltvorrichtung dadurch gekennzeichnet dass das Früheinschalten der Bremsleuchten (13), von einem elektronischen Schaltblock (1) ermittelt ist durch einen, von einem Bewegungsdetektor (3) ergegeben, im Umfang oder in der Frequenz elektrischen wechselbaren Signal das die Bewegung des Kraftsfahrzeuges entspricht und das in die erste Blockstufe (4) standardisiert wird, das resultierende abgeglichene elektrische Signal speist dann einen Stufenregler (5) der, wenn das Bewegungssignalumfang die voreingestellte Geschwindigkeitstufe überschreitet, durch die ergebene Ausgangspannung, eine Schaltstufe (6) aktiviert, das Umschalten dieser Schaltstufe (6) wird dann von einem oder mehreren Endschaltern (2) ermöglicht, nur beim gekuppelten Antriebsmotor und als das Gaspedal in seiner Leeraufstellung zurückgezogen wird, die Verriegelung der Schaltstufe (6) wird aber ergegeben als das Gaspedal wieder betätigt wird oder als das Antriebsmotor freigelassen wird oder am Ende einer bestimmter Betriebszeit.

2. Elektronische Schaltvorrichtung nach Anspruch 1, dadurch gekennzeichnet dass der Bewegungsdetektor (3) ein elektrisches Wechselsignal ergibt, das die KFZ-Geschwindigkeit entspricht, durch einen Drehstromgenerator oder einen Impuls-generator der zum Beispiel das magnetische Drehfeld des KFZ-Tachometers benützt um, durch ein Hall-effektelement oder eine Spule, einen elektrischen periodischen Signal zu geben, dessen Frequenz die KFZ-Geschwindigkeit entspricht.

3. Elektronische Schaltvorrichtung nach Anspruch 1, dadurch gekennzeichnet dass der Bewegungsdetektor (3) ein elektrisches Wechselsignal ergibt, das die Motordrehgeschwindigkeit entspricht durch einen Drehstromgenerator oder einen Impuls-generator, dieses Bewegungssignal könnte zum Beispiel direkt von dem Zündsystem als Impulsgenerator aufgenommen werden, dessen Frequenz die Motordrehgeschwindigkeit entspricht.

4. Elektronische Schaltvorrichtung nach Anspruch 1, dadurch gekennzeichnet dass die erste Blockstufe (4) die das elektrische Wechselsignal standardisiert, von einem Frequenz-Spannungswechsler oder von einer einfacher formigfähiger Schalteinrichtung für Impulsen gebildet wird.

5. Elektronische Schaltvorrichtung nach Anspruch 1, dadurch gekennzeichnet dass der Stufenregler (5), von einem in der Spannung einstellbaren zwei-ständigen Vergleicher oder von einem in der Frequenz einstellbaren logischen Operator gebildet wird.

6. Elektronische Schaltvorrichtung nach Anspruch 1, dadurch gekennzeichnet dass die Schaltstufe (6), von einem mit Transistor gesteuerten elektro-magnetischen Relais oder von einem photo-elektrisch gekoppelten Relais oder von einer Darlington's Montage mit integrierten gekoppelten Elementen gebildet wird.

7. Elektronische Schaltvorrichtung nach Anspruch 1, dadurch gekennzeichnet dass der Schaltblock (1), in einem neuen Ausführungsbeispiel für anderen, zum Geschwindigkeitsverminderung gebundenen Funktionen wie das Benzinschnellschluss gebraucht wird.

**Claims**

1. Control device for the brake lights (13) of motor vehicles and motorcycles, adapted to substitute the conventional control device while the vehicle is not propelled anymore and before the braking pedal (12) has not yet been actuated, the energization of the brake lights (13) being anticipated by a switching unit (1) put in activation beyond a specified speed, the switching itself being enabled when the accelerator of the vehicle is restored to its undepressed position, device characterized in that the energization of the brake lights (13) is anticipated by an electronic switching unit (1), receiving an electric signal variable either in amplitude or in frequency, representative of the movement of the vehicle and produced by a motion sensor (3), reshaped by the first stage (4) of the unit so as to produce a calibrated electric signal applied to a threshold controller (5) which, when the variable magnitude of the motion signal passes the pre-adjusted speed limit, delivers a voltage level permitting the activation of a power commuting stage (6), the switching being enabled by one or several limit switches (2), actuating the commuting stage (6) as soon as the accelerator of the vehicle is restored in its undepressed position if the drive engine is coupled and blocking the commuting stage (6) as soon as the accelerator is once again depressed or the drive engine uncoupled or at the end of a predetermined period of service.

2. Electronic control device according to claim 1, characterized in that the motion sensor (3) delivers a variable electric signal as a function of the speed of rolling of the vehicle by means of a rotary voltage generator or a rotary coder which for example uses the rotary magnetic field produced by the magnet of the tachometer equipping the vehicle to activate a sensor of the Hall effect type or an induction coil so as to produce a periodic electric signal of frequency proportional to the speed of rolling of the vehicle.

3. Electronic control device according to claim 1, characterized in that the motion sensor (3) delivers a variable electric signal as a function of the speed of rotation of the engine of the vehicle by means of a rotary voltage generator or a rotary coder, this motion signal being for example directly recorded from the ignition system of the vehicle playing the role of the rotary coder, so as to produce a periodic electric signal of frequency proportional to the speed of rotation of the drive engine.

4. Electronic control device according to claim 1, characterized in that the first stage (4) that reshapes the variable electric motion signal is constituted by a frequency-voltage converter or by a simple circuit for conforming impulses.

5. Electronic control device according to claim 1, characterized in that the threshold controller (5) is constituted by a bistable comparator adjustable in voltage or by a logic operator adjustable in frequency.

6. Electronic control device according to claim 1, characterized in that the commuting stage (6) is constituted by an electronic relay monitored by a control transistor, the relay being adapted to be replaced by a power transistor or by a Darlington assembly of coupled integrated elements.

7. Electronic control device according to claim 1, characterized in that the switching unit (1), in another embodiment serves to control other functions connected to the deceleration of the vehicle, in particular the abrupt cut-off of the fuel feed.

Figure 1

Figure 2

1